# EUROPEAN PATENT SPECIFICATION

(11) **EP 0 740 062 B1**
(45) Date of publication and mention of the grant of the patent: **04.07.2001**
(21) Application number: 96106571.1
(22) Date of filing: 25.04.1996
(51) Int. Cl.: F02F 3/00, F16J 1/16

(54) **Internal combustion engine**
Brennkraftmaschine
Moteur à combustion interne

(30) Priority: 25.04.1995 JP 12425495; 07.11.1995 JP 31349695; 17.01.1996 JP 2320196
(43) Date of publication of application: 30.10.1996
(73) Proprietor: YAMAHA HATSUDOKI KABUSHIKI KAISHA, Iwata-shi Shizuoka-ken, 438 (JP)
(72) Inventor: Onodera, Akihito, c/o Yamaha Hatsudoki K. K., Iwata-shi, Shizuoka-ken (JP); Miyazawa, Kazuo, c/o Yamaha Hatsudoki K. K., Iwata-shi, Shizuoka-ken (JP)
(74) Representative: Grünecker, Kinkeldey, Stockmair & Schwanhäusser Anwaltssozietät

(56) References cited:
- DE-C- 325 018
- FR-A- 1 300 937
- GB-A- 680 416
- GB-A- 985 066
- US-A- 4 840 498
- PATENT ABSTRACTS OF JAPAN vol. 014, no. 093 (M-0939), 21 February 1990 & JP-A-01 303310 (YAMAHA MOTOR CO LTD), 7 December 1989,

## Description

This invention relates to an internal combustion engine comprising at least one cylinder having a cylinder bore slidingly receiving a reciprocable piston connected via a connecting rod to a crankshaft, said connecting rod having a small end fastened to said piston by means of a piston pin being connected to a pair of pin boss portions, and having a big end fastened to said crankshaft by means of a crank pin, further comprising spherical surface bearings located and slidable in said pin boss portions provided with pin insertion holes.

Such an internal combustion engine is known from GB-A-985 066. This document shows that instead of a rigid piston pin at least two elastical means or springs are used. The respective ends of which are supported in housings which in turn are supported in rings which slide freely inside the bores formed in the bosses of the piston. Moreover, all of these so-called housings as well as bushes at the center of the piston pin like springs show spherical forms which, however, do not act directly on the piston boss parts.

Moreover, reciprocating internal combustion engines include, e.g. one in which a combustion chamber is formed with a cylinder head, a cylinder body, and a piston; combustion pressure produced in the combustion chamber is received with a piston transmitted from pin boss portions provided on both sides in the approximate middle position with respect to the longitudinal direction of the piston to a piston pin, to the small end of a connecting rod, to the big end of the connecting rod, and to a crankshaft disposed in a crank chamber for producing a torque. Air is drawn into the crank chamber by the upward travel of the piston, and primarily compressed by the downward travel of the piston. Along with downward travel of the piston, burned gas is exhausted from the combustion chamber and the primarily compressed air enters the combustion chamber. Such reciprocating internal combustion engines include one in which oil in an oil tank is drawn up with an oil pump and supplied to a bearing portion on the cylinder or crankcase side for supporting a journal portion of a crankshaft disposed in the crank chamber, and to the big end of the connecting rod through an oil passage made obliquely through the journal portion of the crankshaft and branching to the big end. In such an engine, oil after lubricating the big end is allowed to fly around without being controlled in the crank chamber.

The big end of the connecting rod is lubricated as described above, and since the oil collected on the bottom of the crank chamber is returned through a check valve to an intake pipe on the upstream side of a reed valve, lubrication is insufficient on the small end of the connecting rod connected to the piston pin and on the piston pin side.

By the way, both ends of the piston pin are subjected to an explosion force from the piston side during the descent stroke of the piston from the top dead center to the bottom dead center and to an inertia force during the ascent stroke. (By the way, in the two cycle engine, while the explosion force occurs during every descent stroke, in the four cycle engine, the explosion force and the inertia force occur by turns during the descent strokes.) On the other hand, the central portion to the piston pin is subjected to a reactional force from the connection rod side corresponding to the explosion and inertia forces. As a result, the central portion of the piston pin bends toward the cylinder head side during the combustion stroke and the ascent stroke in either the two cycle or four cycle engine, and bends toward the crankcase side during intake (descent) stroke in the four cycle engine. Since both explosion and inertia forces constantly change during the crankshaft rotation, the extent of the bend also changes constantly. The constantly changing bend causes heavy contact on the pin holes in both pin bosses, especially toward the piston circumference sides, and causes permanent deformation and cracks. When such permanent deformation and cracks grow, they lead to breakage of the pin boss portions of the piston. In particular, since the piston is subjected to heat, its strength is likely to lower. The deformation is more likely to occur in engines of a large explosion force, such as the Diesel engine.

Accordingly, it is an objective of the present invention to provide an internal combustion engine as indicated above which which always ensures a reliable transmission of the combustion force from a piston to the crankshaft via a connecting rod, whereas the longevity of the bearings between the piston and the connecting rod and the crankshaft and the connecting rod, respectively, is improved.

According to the invention, this objective is solved in that said spherical surface bearings having an outer surface of spherical shape and an inner cylindrical surface for receiving said piston pin, and that the spherical parts of the spherical bearings are adapted to act directly on pin boss portions of the piston.

According to a preferred embodiment of the invention, the inside diameters of said pin insertion holes are larger than the inside diameter of said spherical surface bearings. This enhances the degree of motion of the piston pin ends without contacting said pin insertion holes.

In order to further enhance the installation of the connection between the piston and the connecting rod, it is advantageous when grooves are provided for inserting said spherical surface bearings which are formed from the outer cylindrical surface of said piston to bearing mounting portions for said spherical surface bearings, whereby these grooves may be parallel or inclined to the axis of piston pin.

The insertion of said piston pins is further enhanced when at least one of the inner peripheral edges adjacent the axis of said piston of said spherical surface bearings and/or at least one of the outer peripheral edges of the ends of said piston pin are chamfered.

In order to reduce or even prevent thermal stresses, it is advantageous when the radius of curvature of said spherical surface bearings in axial direction is smaller than the corresponding radius of curvature of the bearing mounting portions.

The installation of said spherical surface bearings may be further enhanced when said spherical surface bearings are cast with a piston.

Preferably, a reliable lubrication is enhanced when an intake passage communicates via an intake valve with a crank chamber and is located such that said intake valve faces said surface opening of said oil hole when said piston is in its bottom dead center because the pressure of the intake air promotes the spray of said lubricant towards said piston.

According to another embodiment of the invention, an oil pump supplies a crank journal portion of said at least one cylinder with lubricant, said crank journal portion communicating with said oil passage and said oil hole.

Other preferred embodiments of the present invention are laid down in further dependent claims.

In the following, the present invention is explained in greater detail with respect to several embodiments thereof in conjunction with the accompanying drawings, wherein:
Figure 1A shows a cross section along the line A-A of a two-cycle, three-cylinder diesel engine of figure 1B, applied with a piston pin support structure of the present invention;
- Fig. 1B: shows a partial section along the cylinder arrangement of the two-cycle, three-cylinder diesel engine shown in figure 1;
- Fig. 2: shows a connecting rod making connection between a piston and crankshaft;
- Fig. 3: shows lubrication passages;
- Fig. 4: shows the manner of lubrication on the piston pin side;
- Fig. 5: shows the timing of flying oil;
- Fig. 6: shows positioning of the intake passage;
- Fig. 7: shows another embodiment of positioning of the intake passage;
- Fig. 8: shows lubrication on the piston pin side;
- Fig. 9: shows locations of the oil hole and the surface opening;
- Fig. 10: shows a section of the first embodiment having a piston pin support structure of the present invention;
- Fig. 11: shows an enlarged section of the part of the embodiment shown in Fig. 10;
- Fig. 12: shows a section shown in Figure 11 and the description for installation;
- Fig. 13: is a side elevational view showing a piston of Figure 10;
- Fig. 14A: shows the piston in the original state;
- Fig. 14B: shows the same piston thermally deformed;
- Fig. 15A: shows the piston in the original state;
- Fig. 15B: shows the same piston thermally deformed;
- Fig. 16: shows a partially enlarged view of a state of the piston pin and the pin boss portion when a conventional piston is thermally deformed;
- Fig. 17: shows a state of the bearing at the small end of the connecting rod and the piston pin when a conventional piston is thermally deformed;
- Fig. 18: is a partially sectional side elevational view in which only the piston is sectioned and the second embodiment of the piston pin support structure of the present invention is illustrated;
- Fig. 19A: shows the spherical surface bearing of the embodiment shown in Figure 18 and is an elevational view as seen from the direction of the piston pin;
- Fig. 19B: is a sectional view along the line B-B of Figure 19A;
- Fig. 19C: explains the size of one half of the spherical surface bearing which is divided into two halves;
- Fig. 20: shows the description of procedure for installing a spherical surface bearing into the piston body;
- Fig. 21A and 21B: show examples of the spherical shape for the bearing mounting portion in cold state of a piston pin support structure according to the present invention;
- Fig. 22: is a sectional view of a piston according to the third embodiment having a piston pin support structure of this invention;
- Fig. 23: is a sectional view of a semi-finished product for the embodiment shown in Figure 22; and
- Fig. 24: is a sectional view of a semi-finished product in machining for the embodiment shown in Figure 22.

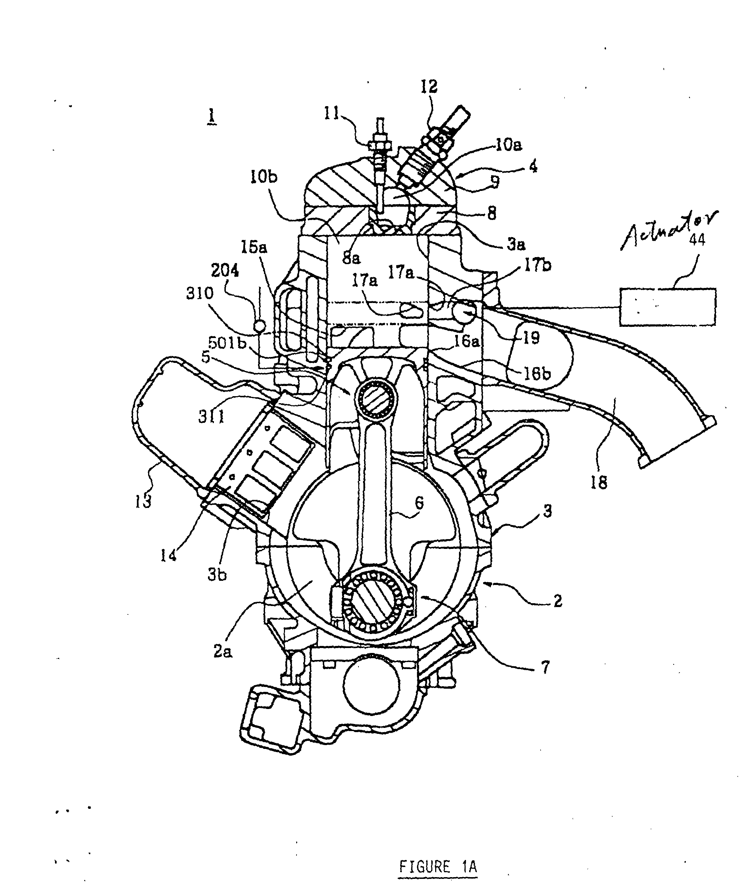

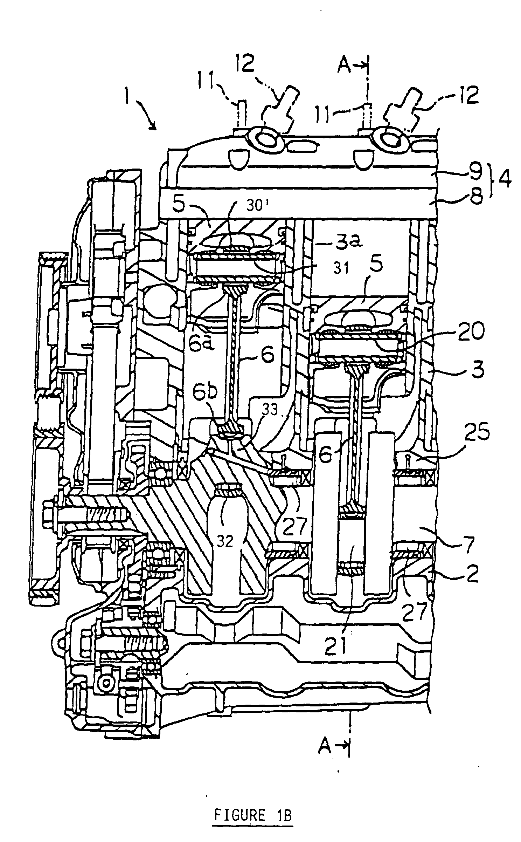

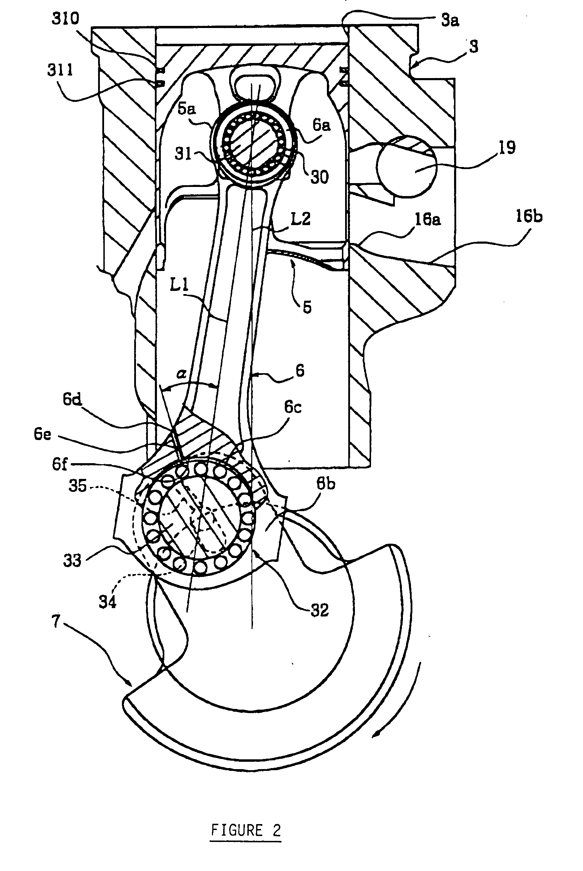

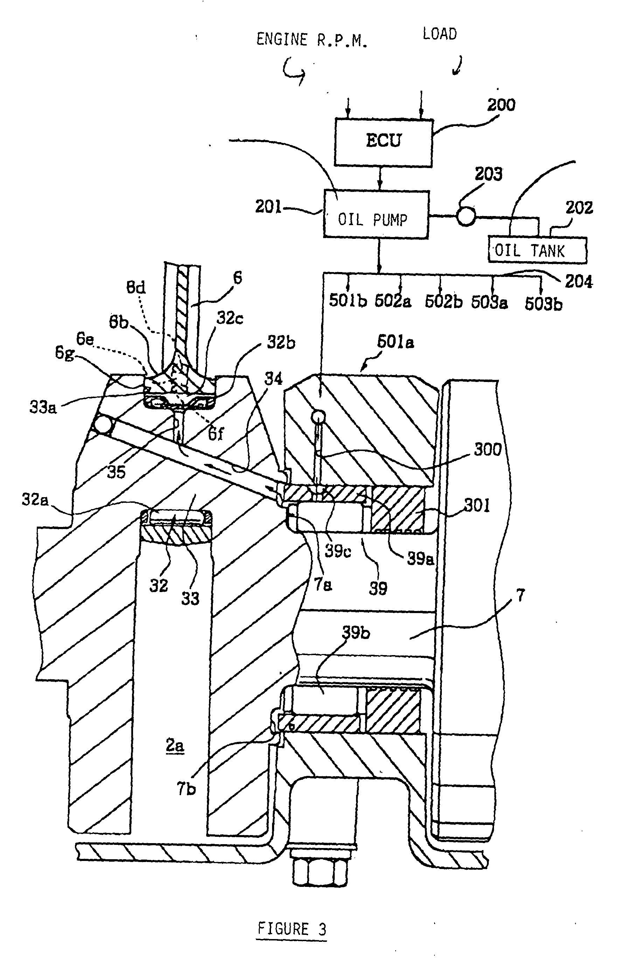

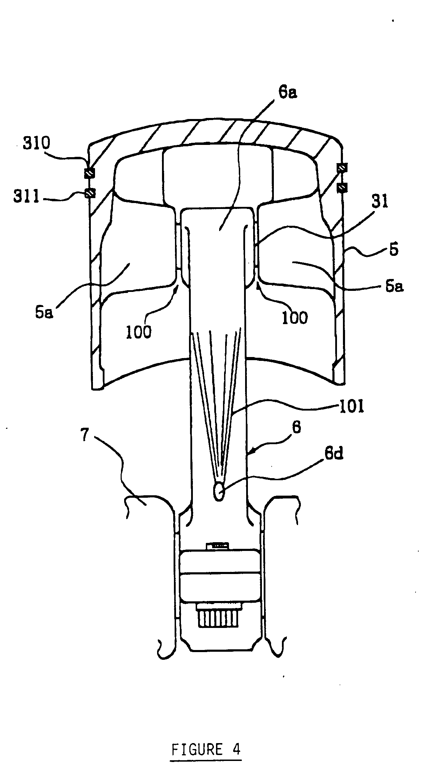

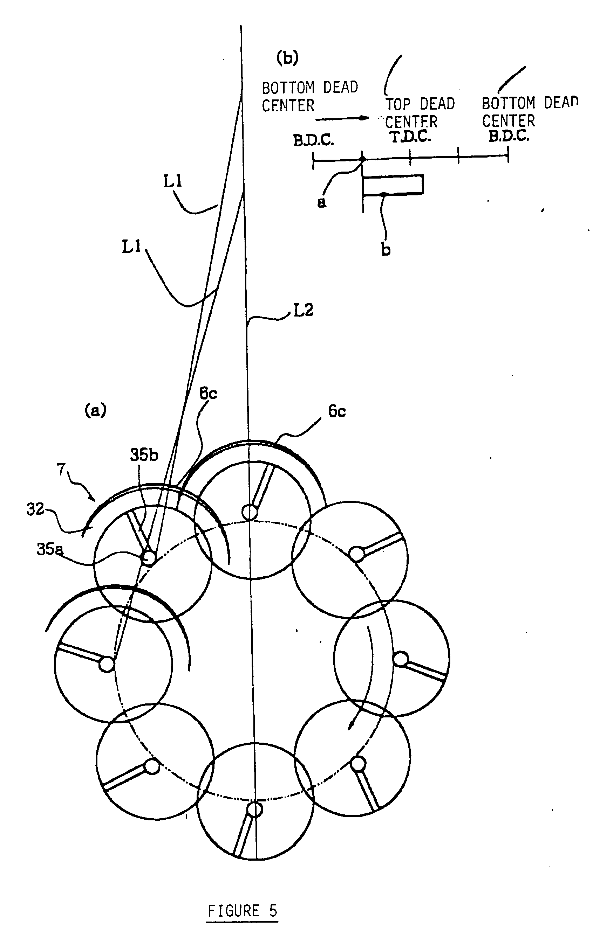

Embodiments of the reciprocating internal combustion engine of this invention will be hereinafter described in reference to the appended drawings. Fig. 1A and 1B show a cross section of a reciprocation internal combustion engine. Fig. 2 shows a connecting rod making connection between a piston and a crankshaft. Fig. 3 shows lubrication passages. Fig. 4 shows the manner of lubrication on the piston pin side. Fig. 5 shows the timing of flying oil.

A reciprocating internal combustion engine 1 is a crankcase compressing two cycle three cylinder Diesel engine. With a crankcase 2, a cylinder body 3 placed on the crankcase, and a cylinder head 4 placed on the cylinder body, all tightened together. A piston 5 inserted for free sliding in a cylinder bore 3a of the cylinder body 3 is connected through a connecting rod 6 to a crankshaft 7 in the crankcase 2.

The cylinder head 4 is of a two-piece split structure with a lower head 8 and an upper head 9. A sub-combustion chamber 10a is formed between the two split pieces and connected through a small diameter passage 8a to a combustion chamber 10b of the cylinder bore 3a. Tips of an ignition glow plug 11 and a fuel injection valve 12 face the sub-combustion chamber 10a.

A crank chamber 2a is formed with the crankcase 2 and the cylinder body 3. The cylinder body 3 is formed with an intake opening 3b connecting to the crank chamber 2a. To the intake opening (3b) is connected an intake duct 13. The intake opening 3b is provided with a reed valve 14 which enables the intake into the crank chamber 2a and at the same time prevents reverse flow and enables the primary compression of fresh charge in the crank chamber 2a.

The cylinder body 3 is provided with two first scavenging ports 15a, 15a and a second scavenging port (not shown) arranged in front and rear relationship, all at the approximate center with respect to the height direction of the cylinder body 3, each connected through a scavenging passage (not shown) to the crank chamber 2a. In the upper part of the cylinder body 3 is formed a main exhaust port 16a opposing the second scavenging port so as to lead to the cylinder outer wall through a main exhaust passage 16b connected to the main exhaust port 16a. A pair of sub-exhaust ports 17a, are formed at positions slightly above the main exhaust port 16a with respect to the cylinder axis direction and spaced from each other in the circumferential direction of the cylinder bore 3a. Sub-exhaust passages 17b respectively connected to the sub-exhaust ports 17a, 17a are joined on their downstream sides to the main exhaust passage 16b which leads to the outside through the exhaust pipe 18.

An exhaust valve 19 is disposed in a sub-exhaust passage 17b which is a middle part of the exhaust passage drawing exhaust gas from the combustion chamber 10b. The exhaust valve 19 crosses and penetrates at least part of the sub-exhaust passage 17b and makes the cross-sectional area of the exhaust passage variable including full closure. The exhaust valve 19 is driven with a driving device 44.

The connecting rod 6 connecting between the piston body 5 and the crank shaft 7 is, as shown in FIG. 1B, connected at the small end 6a, with a piston pin 31 through a bearing portion 30' and is also connected at the big end 6b, with a crank pin 33 through a bearing portion 32.

Although the structure for lubricating the bearings 30', 32 for the small end 6a and the big end 6b is not shown, an oil pump is controlled to be driven by the output signal from an ECU in which the information of the engine speed and the engine load is entered for the diesel engine 1. By the operation of the oil pump, oil introduced into the oil pump from the oil tank through an oil filter is distributed and delivered through an oil distribution pipe to oil discharge outlets opened into the cylinder bores 3a respectively, and to the crank journal portions of the cylinders respectively.

In the respective cylinder, the oil discharge outlet is close to the second piston ring 311 mounted below the first piston ring 310 when the piston is at the bottom dead center, as shown in FIG. 1A and is opened in the inner surface of the cylinder bore 3a.

Next, the lubrication of the bearing position of the connecting rod 6 will be described in reference to Figs. 2 through 5. As shown in FIG. 2, the small end 6a of the connecting rod 6 is connected through a bearing 30 to a piston pin 31 which is inserted in a pair of pin boss portions 5a of the piston 5. The big end 6b of the connecting rod 6 is connected through a bearing 32 to a crankpin 33 which is part of the crankshaft 7. In the crankshaft 7 are formed oil passages 34, 35 running between a crank web end surface 7a and the bearing 32 and connected to an oil holding space in a journal bearing portion 39 so that oil is sent to the big end 6b of the connecting rod 6 and to the bearing 32 for lubrication.

The reciprocating internal combustion engine 1 is provided with an ECU 200 for controlling the drive of an oil pump 201 according to engine speed and load information. As the oil pump 201 is driven, oil in an oil tank 202 is drawn through an oil filter 203 to the oil pump 201 and supplied through an oil distribution pipe 204 to a crank journal portion 501a of the first cylinder, an inner wall outlet portion 501b of the first cylinder, a crank journal portion 502a of the second cylinder, an inner wall outlet portion 502b of the second cylinder, a crank journal portion 503a of the third cylinder, and an inner wall outlet portion 503b of the third cylinder.

The oil led to the crank journal portion 501a of the first cylinder is led from an oil passage 300 to the journal bearing portion 39. The journal bearing portion 39 is constituted with an outer cage 39a and needles 39b and sealed with a seal member 301. The oil led from the oil passage 300 to the journal bearing portion 39 is led through oil holes 39c of the outer cage 39a to the needles 39b for lubricating them, and to an annular oil groove 7b formed on the crank web end surface 7a. The oil is further led from the annular oil groove 7b to the oil passages 34, 35 formed in the crankpin 33. The end portion of the outer cage 39a of the journal bearing portion 39 slightly projects into the oil groove 7b to reduce the gap between the outer circumference of the outer cage 39a and the inner circumference of the larger diameter side of the oil groove 7b, and therefore, little amount of oil is sprayed out through the gap directly to the crank chamber 2a. Almost all amount of the oil supplied to the journal bearing portion 39 is sent through the oil passages 34, 35 to the outer circumferential portion of the crankpin 33.

The oil supplied to the inner wall outlet portion 501b of the first cylinder is delivered from an outlet port to part of the cylinder inner wall which is located, when the piston 5 is at the bottom dead center as shown in FIG. 1, near a second piston ring 311 located below a first piston ring 310.

Oil supply to the crank journal portion 502a of the second cylinder and the inner wall outlet portion 502b of the second cylinder is arranged likewise, and also, oil supply to the crank journal portion 503a of the third cylinder and the inner wall outlet portion 503b of the third cylinder is arranged likewise.

The bearing 32 is interposed between the outer circumference of the crankpin 33 and the big end 6b of the connecting rod 6, and constituted with needles 32a and a holder 32b. In particular, oil is supplied to a gap 32c between one needle 32a and another separated from each other by the holder 32b, and further through an oil holding groove 6c and an oil hole inlet 6f, an oil hole 6c to a surface opening 6d.

The oil holding groove 6c is formed on the small end side inner circumferential surface of the big end 6b of the connecting rod 6. The oil hole 6e runs from the oil holding groove 6c of the big end 6b of the connecting rod 6 to the surface opening 6d of the connecting rod 6. The surface opening 6d is located on the side, with respect to the line L1 stretched between the centers of the small end 6a and the big end 6b of the connecting rod 6, to which the connecting rod 6 moves from the cylinder center L2 during the ascent stroke of the piston 5 from the bottom dead center to the top dead center.

Though oil passes through the small gaps (on both sides) between the side walls 33a on the bearing sides of the crankpin 33 and the bearing hole end portion 6g of the big end 6b of the connecting rod 6, and runs out into the crank chamber 2a, because of viscosity, oil is less likely to pass through the small gaps and the amount of oil running out is small. Even when the length of the small gap is long and therefore the total area of the small gap is equal or to larger than the area of the oil hole inlet 6f, the amount of oil passing through the small gap and running out to the crank chamber 2a can be made almost zero by making the total area of the small gap smaller than the area of the oil hole inlet 6f.

As shown in FIG. 5, oil collects in the oil holding groove 6c of the big end 6b of the connecting rod 6 during the period when the piston 7 moves from a middle point a of the ascent stroke, from the bottom dead center B.D.C. to the top dead center T.D.C. to the point slightly beyond the T.D.C. as the crankshaft 7 is assumed to rotate clockwise. The oil collected in the oil holding groove 6c of the big end 6b of the connecting rod 6 is led by centrifugal force caused by the rotation of the crankshaft 7 through the oil hole 6e to the surface opening 6d in the center of the side surface of the connecting rod 6, and thrown from the surface opening 6d to the small end 6a of the connecting rod 6 and to the back side of the piston head for lubrication. As shown in FIG. 4, the flying oil 101 is also sprayed to gaps 100 between the small end 6a of the connecting rod 6 and the piston bosses 5a.

The timing b of the flying oil is determined by the position and size of the surface opening 6d of the crankshaft. In this embodiment, the surface opening 6d is sized to 1/40 to 1/50 of the cylinder bore and positioned as shown in FIG. 2 within the angle range α from 15° to 45° with respect to the connecting rod center. Thus, the probability of oil thrown by the rotation of the crankshaft from the big end 6b is increased.

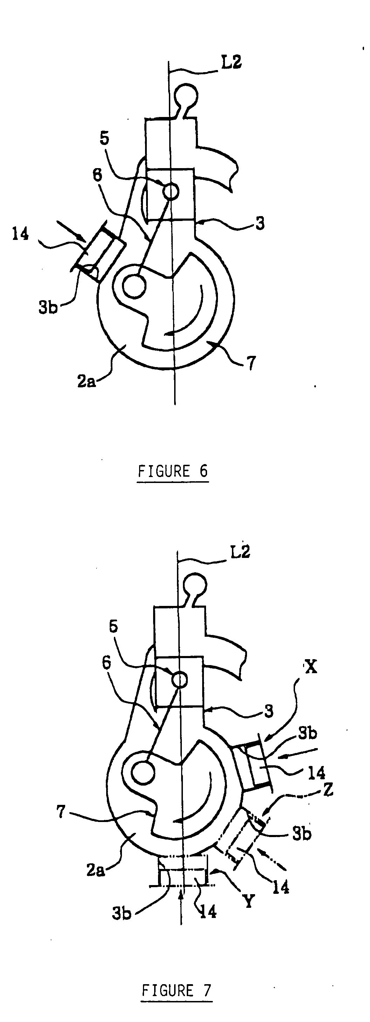

Next, the positioning of the intake opening 3b will be described. In the embodiment shown in FIG. 6 the crank chamber 2a is connected to the intake opening 3b through a reed valve 14 as a check valve for the crank chamber 2a. The connecting position of the intake opening 3b is on the connecting rod 6 side with respect to the cylinder center line L2 so that the intake opening 3b faces the big end 6b of the connecting rod 6 when the piston 5 is in the ascent stroke. With such an arrangement, oil thrown by air flow from the intake opening 3b and the rotation of the crankshaft 7 from the big end 6b is more securely and effectively directed to the small end 6a of the connecting rod 6 and to the back side of the piston head for lubrication.

In the embodiment shown in FIG. 7, the crank chamber 2a is connected to the intake opening 3b through a reed valve 14 as a check valve for the crank chamber 2a. The connecting position of the intake opening 3b is on the opposite side X of the connecting rod 6 with respect to the cylinder center line L2 near the T.D.C. However, it may also be located as shown with phantom lines in the position Y near the B.D.C. or in the position Z between the two positions described above.

Thus, with the intake opening 3b located on the opposite side of the connecting rod with respect to the cylinder center line L2 and connected through the reed valve 14 to the crank chamber 2a air flow from the intake opening 3b runs along the rotating direction of the crankshaft 7, and therefore oil thrown from the big end 6b is directed with a higher probability to the small end 6a of the connecting rod 6 and to the back side of the piston head for lubrication.

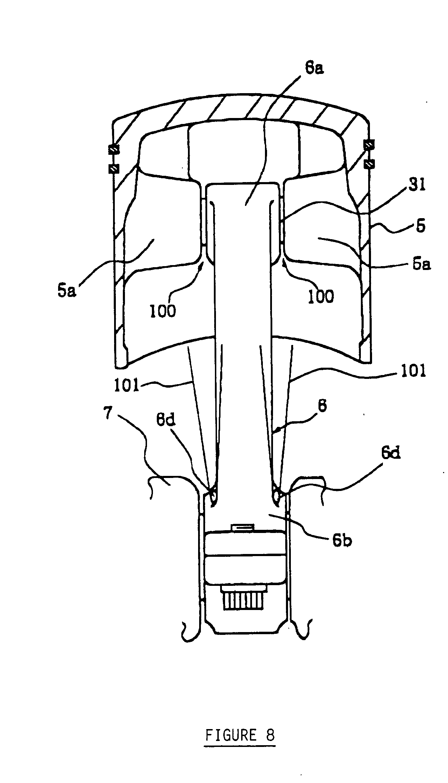

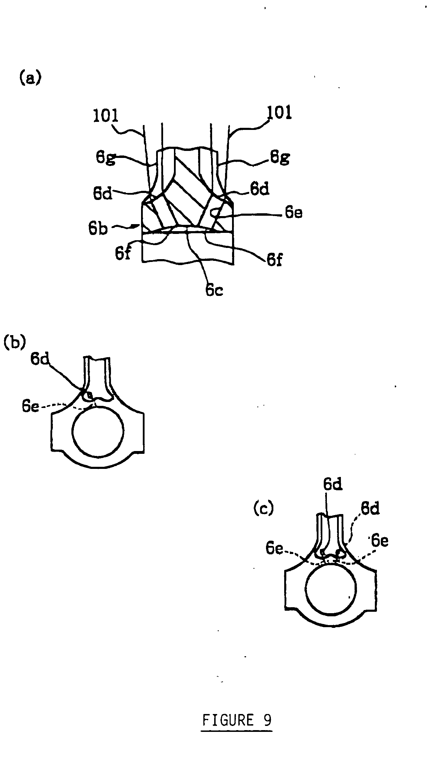

Another embodiment of the oil hole 6e in the connecting rod 6 will be described in reference to Figs. 2, 8 and 9. The connecting rod 6 is provided, like the oil hole 6e shown in FIG. 2, with two oil holes 6e directed to the crankpin hole center of the big end 6b of the connecting rod 6 within the range α from 15° to 45° as seen in the crankpin axis direction with respect to the connecting rod center and directed to the crankpin center of the big end 6b of the connecting rod 6b. The surface opening 6d of the oil holes 6e are located on both sides of the connecting rod 6 with a distance from each other in the crankshaft axis direction. At least part of the surface opening 6d is located outside the rib 6g of the connecting rod 6. Thus, the flying oil flow 101 enters more securely the gaps 100 between the small end 6a of the connecting rod 6 and the piston bosses 5a, to lubricate more securely the area around the piston pin 31. While the oil holes 6e and their surface openings 6d are located on the same side as seen in the crankpin axis direction in FIG. 9b, they may be displaced from each other as shown in FIG. 9c.

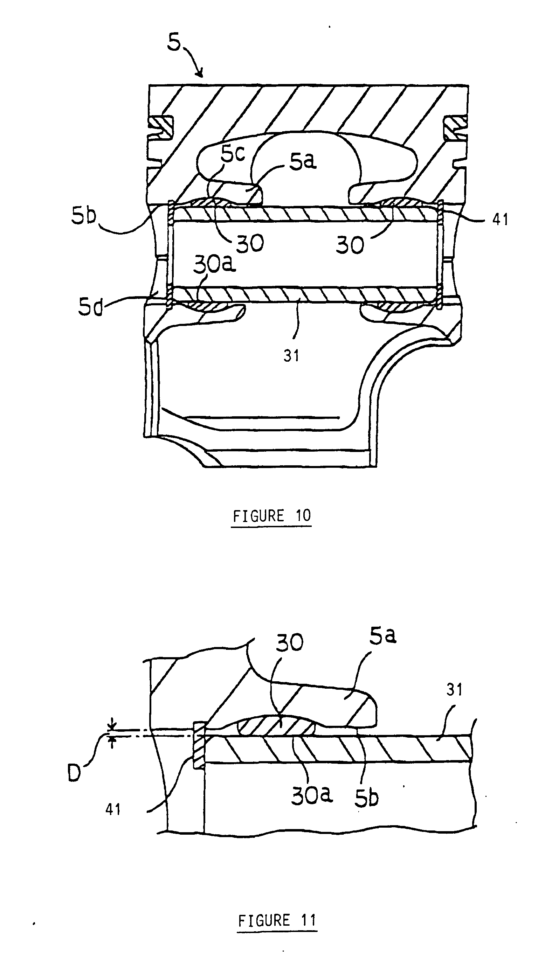

Figs. 10 through 13 illustrate an first embodiment of a support structure for the piston pin 31. As shown in FIG. 10, pin insertion holes (5b) through the both sides of the piston pin 31 are formed in a pair of the pin boss portion 5a which are formed integrally with the piston body 5. In each of the pin insertion holes 5b is formed a bearing mounting portion 5c in which a spherical surface bearing 30 having a spherical outer surface and provided with a pin hole 30a for inserting the piston pin 31 generally at the center thereof is slidably mounted.

Then, the piston pin 31, as shown in FIG. 1B at the center portion of which the small end 5a of the connecting rod 6 is fitted via bearing 29 is supported by the piston body 5 through the pin boss portion 5a such that the both end portions of the piston pin 20 are, as shown in FIG. 10, inserted in the pin holes 30a of the spherical surface bearings 30, respectively, and stopped with snap rings 41 against coming off from the pin insertion hole 5b.

The pin insertion holes 5b formed in the pin boss portions 5a of the piston body 5 have an inner diameter larger than that of the pin holes 30a and thus, as shown in FIG. 11 a gap D is present between the pin insertion holes 5b and the piston pin 31. In this embodiment, this gap D is determined as a minimum value enough to prevent the inner surface of the pin insertion holes 5b from contacting the end of the piston pin 31.

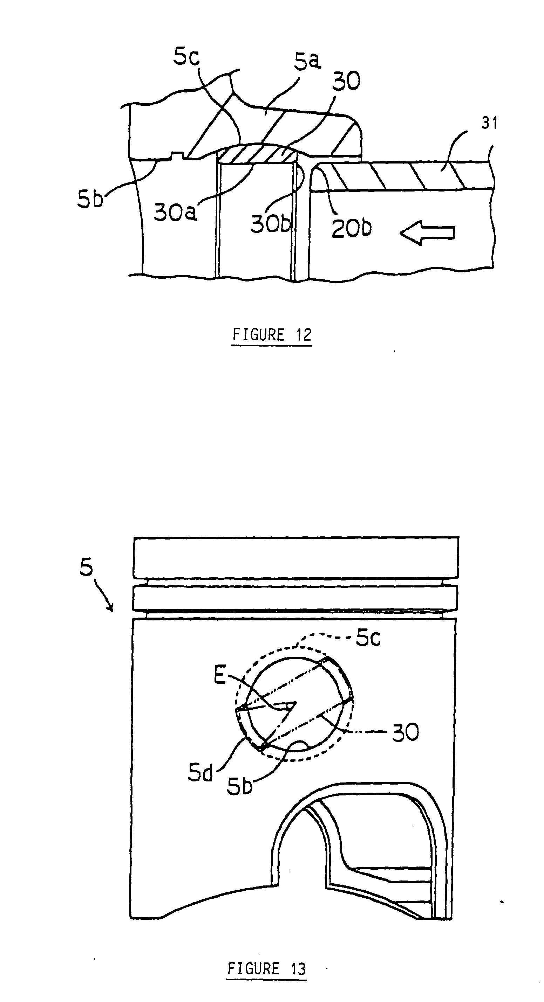

In this embodiment, grooves 5d for inserting the spherical surface bearings is formed from the outer surface of the piston body 5 to the bearing mounting portions 5c so that the spherical bearings 30 can be inserted to be mounted in the bearing mounting portions 5c provided in the pin insertion hole 5b of the pin boss portions 5a. As shown in FIG. 13, these grooves 5d for the insertion of the spherical bearing are formed to be inclined relative to the piston axis.

While keeping the spherical bearing 30 in such attitude that the axis of the pin insertion hole 5b and the axis of the spherical bearing 30 cross at right angles. The spherical bearing 30 is inserted to fit with the groove 5d described above. For preventing the excessive size of the grooves 5d for the insertion of the spherical bearing in view of the strength of the piston body 5, it is preferable to determine the size of the spherical bearings 30 in the axial direction such that the angle E formed by the lines connecting the spherical center of the spherical bearing 30 and both of the marginal ends respectively is within 90 degrees.

In this embodiment, the inner peripheral edge 30b of the spherical bearing 30, as shown FIG. 12, is chamfered and the outer peripheral edge 20b of the end of the piston pin 31 is also chamfered.

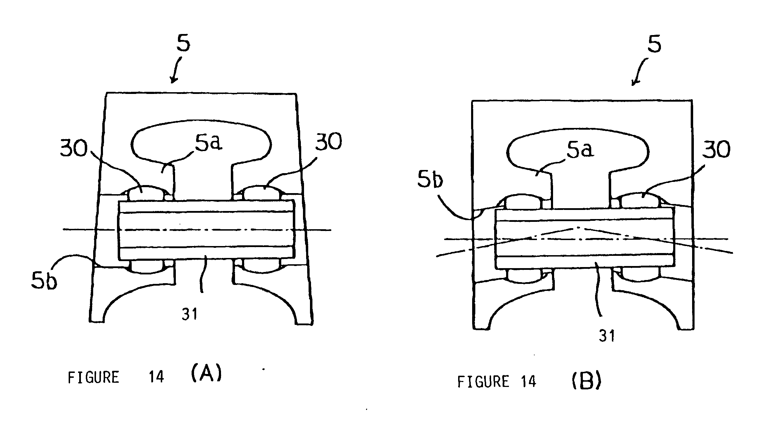

In the piston pin support structure of the embodiment as described above, when the piston body 5 formed in a tapered (truncated cone) shape as shown in FIG. 14A is thermally deformed to be in a cylindrical shape as shown in FIG. 14B, the pin boss portions 5a will be distorted in such a manner that the pin insertion holes 5b incline downwardly and outwardly. Nevertheless, the piston pin 31 does not interfere with the pin boss portions 5a and keeps in the original state, since the spherical bearing 30 disposed between the pin boss portions 5a and the piston pin 31 is slidable.

Accordingly, as shown in FIG. 14B, when the pin boss portion 5a is thermally deformed, any local wear resulting from that the ends of the piston pin 31 has contacted the inner surface of the pin insertion holes 5b of the pin boss portions 5a does not occur. As the distortion produced by the thermal deformation of the pin boss portions 5a does not affect the piston pin 31. The pin boss portions 5a are not forced to be plastically deformed by the piston pin 31 and the piston pin 31 is not affected by the thermal deformation of the pin boss portions 5a.

Furthermore, as the gap D between the pin insertion holes 5b and the piston pin 31 is defined as a minimum dimension enough to prevent the ends of the piston pin 31 from the contacting the inner surface of the pin insertion holes 5b when the piston body 5 is thermally deformed, snap rings 41 of conventional size can be seated to engage with grooves having depth enough to retain the piston pin 31 securely in the piston insertion holes 5b by the snap rings 41.

The grooves 5d for the insertion of the spherical surface bearings are also used for mounting or dismounting snap rings for a conventional piston, and is disposed to be inclined relative to the piston axis, and therefore possible breakage of the piston caused by the arrangement of the grooves which are disposed normal to the piston axis can be avoided. When the piston pin 31 is subject to the maximum load from the rotation of the crank shaft 7, such a breakage of the piston body 5 caused from the grooves 5d can be also prevented since the maximum load is applied to the portions of the piston body 5 remote from the grooves 5d.

As the inner edges 30b of the pin holes 30a of the spherical surface bearing 30 and the peripheral edges 20b of the ends of the piston pin 31 are machined to be chamfered, the piston pin 31 can be smoothly inserted into one of the pin insertion holes 5b of the pin boss portions 5a without interference between piston pin 31 and the spherical surface bearing 30. When the assembly operation is performed for the piston body 5 in which the spherical surface bearings are mounted.

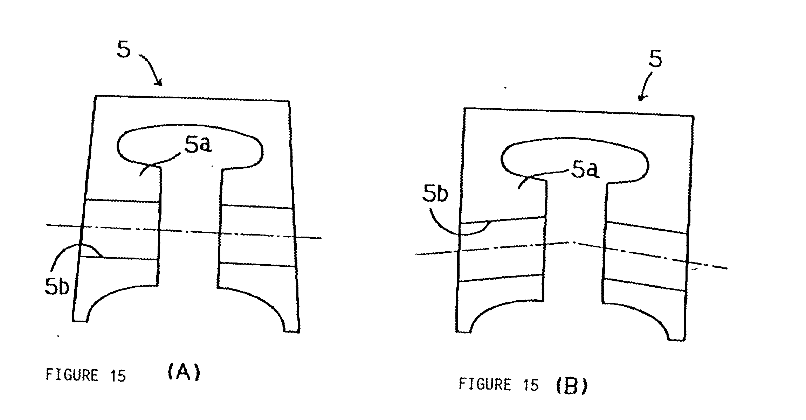

Figures 15 through 17 illustrate in contrast to the invention a conventional piston connection. Figure 15A shows the original state for instance at room temperature and Figure 15B shows the same piston thermally deformed during engine operations.

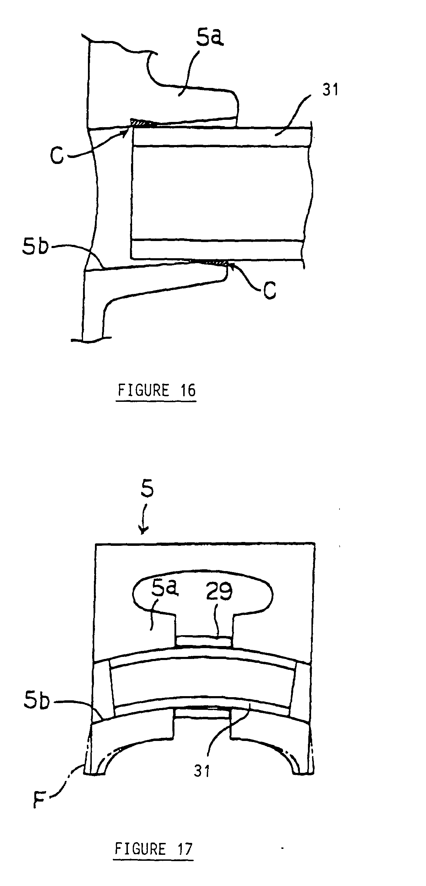

As it is apparent from Figure 16 which shows a partially enlarged view of a state of the piston pin and the pin boss portion when this piston is thermally deformed, the piston pin 31 is forced against the inner surface of that piston pin hole 5b at the regions C. This forced contact at the regions C inadvertently leads to malfunctions of this connection.

Figure 17 illustrates that the piston pin 31 is largely bent when this conventional piston is thermally deformed.

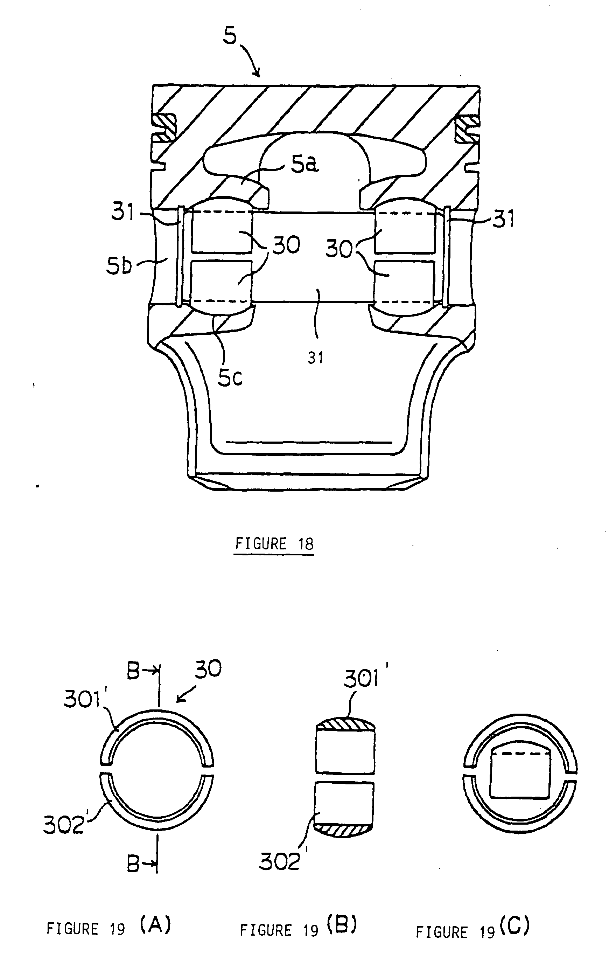

Figs. 18 through 20 show another embodiment of the structure for supporting the piston pin 31 by the spherical surface bearing 30. In this embodiment the spherical surface bearing 30 is divided into two parts and is not provided with such grooves 5d for the insertion of the spherical surface bearings as shown in the first embodiment.

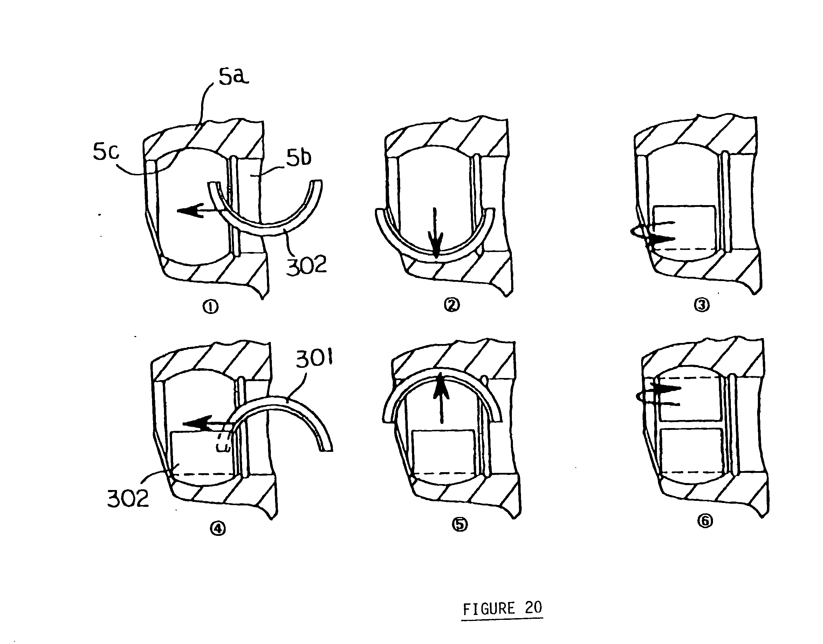

In other words, the spherical surface bearings 30 of the present invention is, as shown in Figs. 19A and 19B formed in two halves so that the spherical surface bearings 30 of ring shape as seen from the axial direction is divided into two parts 301', 302'. As shown in FIG. 19C, the size of the two parts 301', 302' is defined as the size enough to be contained in the inner diameter of the spherical surface bearing 30.

Therefore, even if the grooves extending from the outer surface of the piston body 5 to the bearing mounting portions 5c is not provided in the pin insertion holes 5b of the pin boss portion 5a of the piston body 5 for the insertion of the spherical surface bearings, it is possible to mount the halves as parts 301', 302' of the spherical surface bearings 30 to the bearing mounting portions 5c one by one, through the pin insertions holes 5b.

According to the piston pin support structure of the embodiment having the spherical surface bearings 30 divided into two halves described above, the spherical surface bearings 30 can be mounted to fit in the piston body 5 without grooves for inserting the bearings and therefore, it is necessary to provide grooves only for engaging and disengaging snap rings.

Accordingly, comparing to the case that the grooves are provided, the area where the spherical surface of the spherical surface bearing 30 contact with the corresponding bearing mounting portion 5c is larger (by the area corresponding to the groove in the bearing mounting portion 5c). Therefore, the surface pressure subject to the spherical surface bearing 30 can be diminished and the strength around the pin boss portion 5a of the piston body 5 is improved since there is only a small groove for a conventional snap ring and no big groove for mounting the spherical surface bearing 30.

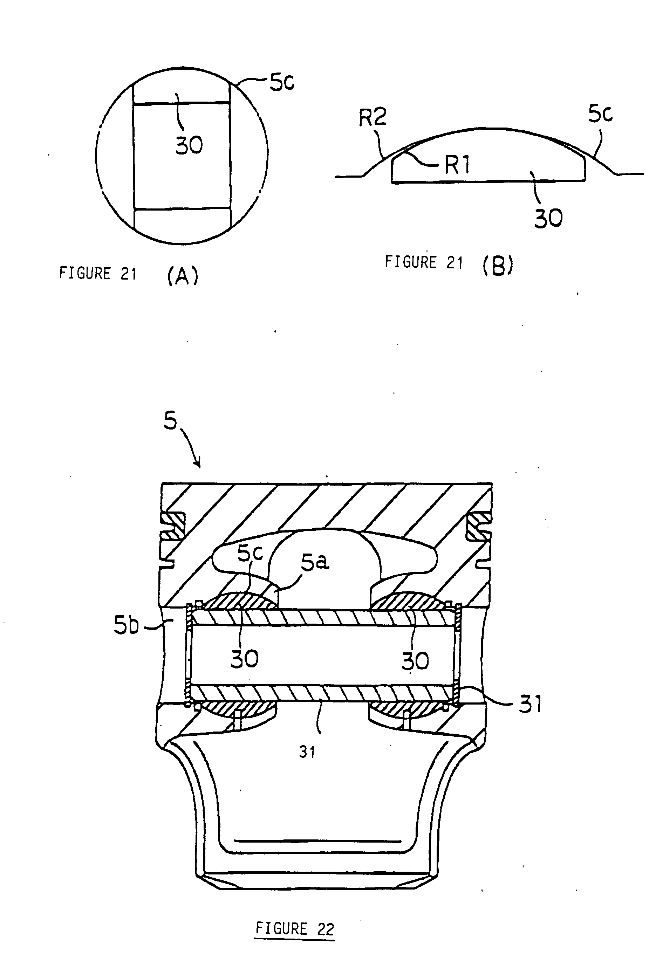

In each of the above-described embodiments, any of the spherical surface of the spherical surface bearing 30, as shown in Fig. 21A, has approximately the same radius to that of the spherical surface of the bearing mounting portion 5c and, further, during engine operation suitable clearance is produced between the spherical bearing 30 and the bearing mounting portion 5c by the difference of thermal expansion coefficient between the spherical surface bearing 30 and the piston body 5.

However, the sphere profile of the spherical surface bearing 30 may be formed, as shown in FIG. 21B so that, during in cold state of the piston the radius R1 of the spherical surface in the axis direction of the spherical surface bearing 30 is smaller than the radius R2 of the spherical surface of the bearing mounting portion 5c so as to axially contact the spherical surface bearing 30 and the bearing mounting portion 5c each other at the central portions respectively and to produce clearance on the both sides thereof.

In other words, the radius of the arc of the spherical surface bearing in the axial direction is smaller than that of the arc the bearing in the circumferential direction and further the sphere surface of the spherical bearing 30 is not a true sphere profile but a curvature in which the central portion of the outer surface in the circumferential direction is projected outwardly, and thus the central portion of the spherical bearing 30 contacts to the bearing mounting portion 5c. The rotation of the spherical surface bearing 30 relative to the piston body 5 during the cold state of the piston can be effectively restrained.

Although the spherical surface of the spherical surface bearing 30 has a profile as described above, the spherical surface bearing 30 is slidable relative to the bearing mounting portion 5c since clearance is produced wholly between the spherical surface bearing 30 and the bearing mounting portion 5c by the difference of thermal expansion coefficient between the spherical surface bearing 30 and the piston body 5.

Figs. 22 through 24 show a further embodiment of the support structure for supporting the piston pin 31 by the spherical surface bearing 30. In this embodiment, the spherical surface bearings 30 are cast with the piston body 5. As can be seen from FIG. 22 the grooves 5d for the insertion of the spherical surface bearing are not provided from the bearing mounting portion 5c of the pin boss portion 5a to the center surface of the piston body 5 as well as the second embodiment.

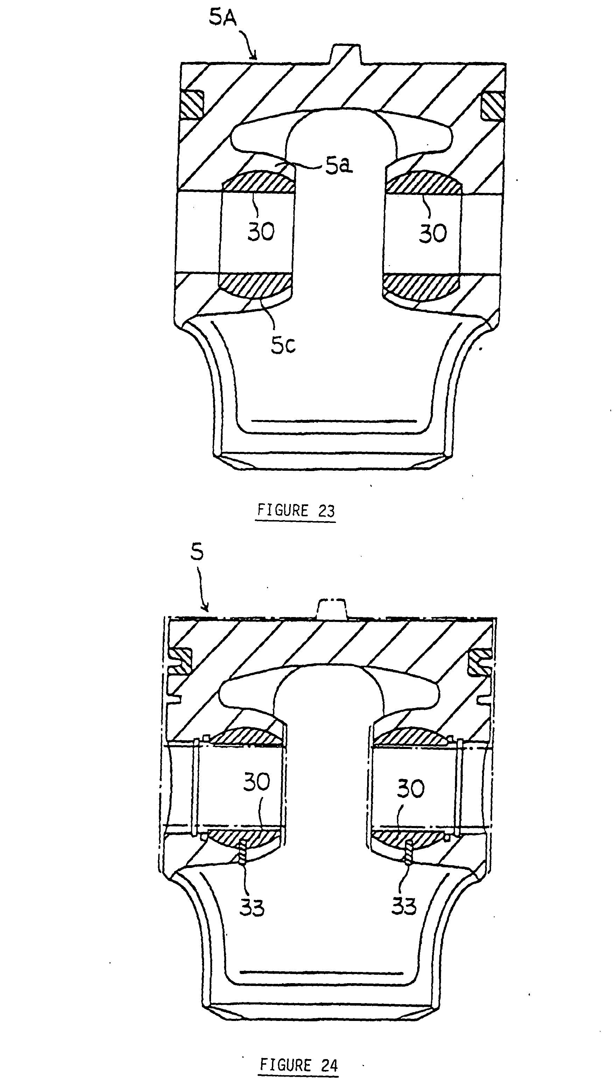

In other words, the spherical surface bearing 30 of this embodiment is set in a mold, and then the piston body 5 is cast to obtain a semi-finished piston body 5A. The spherical surface bearing 30 is resulted to be formed integrally with the pin boss portion 5a, as shown in FIG. 23, when semi-finished piston body 5A is machined, the inner surface of the spherical surface bearing 30 is machined to be enough to insert the piston pin 20, as shown in FIG. 22.

The spherical surface bearing 30 cast into the piston body 5 has superior property of abrasion resistance antiseizing and is made of such materials having smaller thermal expansion coefficient than that of the material (aluminium alloy) of the piston body 5 as cast iron or iron based sintered materials. The surface of the spherical portion is treated by nitriding.

When the piston body 5 is cast while setting the spherical surface bearing 30 in the casting mold, the spherical surface bearing 30 must be cooled or must not be heated. On the outer surface of the spherical surface bearing 30 is applied parting agent such as oil.

When the semi-finished product 5A of the piston body 5 and the spherical surface bearings 30 are machined, as shown in FIG. 24, pins 33 are inserted through the pin boss portions 5a and the spherical surface bearings 30 for preventing the circumferential rotation of the bearing 30 during the machining operation of the inner surfaces of the spherical surface bearing 30.

In the spherical surface bearings 30 integrally cast in the piston body 5 of this embodiment, the clearance is produced between the spherical surface bearing 30 and the piston body 5 by the difference of thermal expansion coefficient and thus the spherical surface bearing 30 is allowed to move slidably.

According to the piston pin support structure of the third embodiment in which the spherical surface bearing 30 is integrally cast, spherical surface machining on the bearing mounting portions 5c is not needed. The piston 31 can be easily mounted since the pins 33 prevent the piston body 5 and the spherical surface bearing 30 from rotating. The clearance between the spherical surface bearing 30 and the bearing mounting portions 5c may be made minimum and suitable by the thermal expansion during engine operation.

Although the piston pin support structure of this invention is described above, referring to the embodiments for two-cycle, three-cylinder diesel engine, this invention limited to the above machined diesel engines is not effectively applied to the engines of a cylinder injection of fuel type having forced feed lubrication system such as gasoline engine or four cycle engine.

According to the piston pin support structure for a piston of an internal combustion engine of the present invention described above, when the piston body is thermally expanded to be deformed during engine operation, the pin boss portion of the piston body is not subject to plastic deformation and local wear. The piston body is prevented from damage and the piston pin is also prevented from deformation. As the result the life time of the bearing disposed between the piston pin and the small end of the connecting rod is improved and further the sliding loss of the piston within the cylinder can be also reduced.

In addition, lubrication of the small end of the connecting rod as well as of the bid end of the connecting rod is enhanced. In particular, lubrication is made with the oil flying off the big end of the connecting rod and reaching the small end of the connecting rod and the back side of the piston as the crankshaft rotates.

According to the invention, due to the improvement of the longevity of said connecting portions between the piston and the crankshaft, it is facilitated to always ensure a reliable transmission of the combustion force to the crank chamber.

## Claims

1. Internal combustion engine (1) comprising at least one cylinder (3) having a cylinder bore (3a) slidingly receiving a reciprocable piston (5) connected via a connecting rod (6) to a crankshaft (7), said connecting rod (6) having a small end (6a) fastened to said piston (5) by means of a piston pin (31) being connected to a pair of pin boss portions (5a), and having a big end (6b) fastened to said crankshaft (7) by means of a crank pin (33), further comprising spherical surface bearings (30) located and slidable in said pin boss portions (5a) provided with pin insertion holes (5b), **characterized in that** said spherical surface bearings (30) having an outer surface of spherical shape and an inner cylindrical surface for receiving said piston pin (31), and that the spherical parts of the spherical bearings (30) are adapted to act directly on pin boss portions (5a) of the piston (5).

2. Internal combustion engine according to claim 1, **characterized in that** an oil passage (34, 35) is formed in the crankshaft (7) leading to the big end (6b) of said connecting rod (6), communicating with a first oil hole (6e) opening at a surface of the connecting rod (6), said oil hole (6e) extending inclined upwardly under an acute angle (α) with respect to a center line (L1) connecting the centers of the small and big ends (6a, 6b) of the connecting rod (6).

3. Internal combustion engine according to claim 1 or 2, **characterized in that** the inside diameters (A) of said pin insertion holes (5b) are larger than the inside diameter (B) of said spherical surface bearings (30).

4. Internal combustion engine according to at least one of the claims 1 to 3, **characterized by** grooves (5d; 5c') for inserting said spherical surface bearings (30) and being formed from the outer cylindrical surface of said piston (5) to bearing mounting portions (5c) for said spherical surface bearings (30) and that these grooves (5d; 5c') are parallel or inclined to the axis of said piston pin (31).

5. Internal combustion engine according to at least one of the claims 1 to 4, **characterized in that** an angle (E) between the peripheral edges and the center of said spherical surface bearings (30) is smaller than 90°.

6. Internal combustion engine according to at least one of the claims 1 to 5, **characterized in that** at least one of the inner peripheral edges (30b) adjacent the axis of said piston (5) of said spherical surface bearings (30) and/or at least one of the outer peripheral edges (20b) of the ends of said piston pin (31) are chamfered.

7. Internal combustion engine according to at least one of the claims 1 to 6, **characterized in that** said spherical surface bearings (30) consists of two parts (301', 302').

8. Internal combustion engine according to at least one of the claims 1 to 7, **characterized in that** the radius (R1) of curvature of said spherical surface bearings (30) in axial direction is smaller than the corresponding radius (R2) of curvature of bearing mounting portions (5c).

9. Internal combustion engine according to at least one of the claims 1 to 8, **characterized in that** said spherical surface bearings (30) are cast with the piston (5).

10. Internal combustion engine according to at least one of the claims 1 to 9, **characterized in that** the outside diameters of both ends of said piston pin (31) is tapered comprising a first taper beginning at the peripheral surface of said piston pin (31) followed by a second taper being steeper than the first taper.

11. Internal combustion engine according to at least one of the claims 2 to 10, whereas said internal combustion engine (1) is of a crankcase compression type, **characterized in that** an intake passage (13) communicates via an intake valve (14) with a crank chamber (2a) and being located such that said intake valve (14) faces said surface opening (6d) of said oil hole (35) when said piston (5) is in its bottom dead center.

12. Internal combustion engine according to at least one of the claims 2 to 10, whereas said intemal combustion engine (1) is of a crankcase compression type, **characterized in that** an intake passage (13) communicates via an intake valve (14) with a crank chamber (2a) and being located such that said control valve (14) faces the side of said connecting rod (6) opposite said surface opening (6d) of said oil hole (35) when said piston (6) is in its bottom dead center.

13. Internal combustion engine according to claim 12, **characterized in that** said intake valve is a reed valve (14).

14. Internal combustion engine according to claim 11 or 13, **characterized in that** an oil pump (201) supplies a crank journal portion (501a) of said at least one cylinder (3) with lubricant, said crank journal portion (501a) communicating with said oil passage (34, 35) and said oil hole (6e).

15. Internal combustion engine according to at least one of the claims 11 to 14, **characterized by** an oil holding groove (6c) provided at the big end (6b) of said connecting rod (6).

16. Internal combustion engine according to at least one of the claims 11 to 15, **characterized in that** the size of said surface opening (6d) is from 1/40 to 1/50 of the size of said cylinder bore (3a).

17. Internal combustion engine according to at least one of the claims 11 to 16, **characterized in that** said surface opening (6d) is positioned in an angle (α) to the center of said connecting rod (6) in a range from 15° to 45°.

18. Internal combustion engine according to at least one of the claims 11 to 17, **characterized by** a second oil hole (6e) opposite to said first oil hole (6e).

## Patentansprüche

1. Brennkarftmaschine (1) mit zumindest einem Zylinder (3), der eine Zylinderbohrung (3a) aufweist, in der gleitbar ein hin- und her bewegbarer Kolben (5) verbunden über eine Pleuelstange (6) mit einer Kurbelwelle (7) aufgenommen ist, wobei die Pleuelstange (6), die einen kleinen Kopf (6a) befestigt über einen Kolbenbolzen (31) an dem Kolben (5) aufweist, mit einem Paar Kolbenbolzen-Nabenabschnitten (5a) verbunden ist, und die einen großen Kopf (6b) aufweist, der an der Kurbelwelle (7) durch einen Kurbelbolzen (33) befestigt ist, mit außerdem Kugeloberflächenlagern (30), die in den Kolbenbolzen-Nabenabschnitten (5a) versehen mit den Bolzeneinsatzbohrungen (5b) angeordnet und gleitbar sind, **dadurch gekennzeichnet,** daß die Kugeloberflächenlager (30) eine Außenoberfläche von kugelförmiger Form haben und eine Innenoberfläche, zur Aufnahme des Kolbenbolzens (31) und daß die sphärischen Teile der Kugeloberflächenlager (30) vorgesehen sind, direkt in Wirkverbindung mit Kolbenbolzen-Lagerabschnitten (5a) des Kolbens (5) zu sein.

2. Brennkraftmaschine nach Anspruch 1, **dadurch gekennzeichnet,** daß ein Ölkanal (34,35) in der Kurbelwelle (7) ausgebildet ist, der zu dem großen Kopf (6b) der Pleuelstange (6) führt, kommunizierend mit einer ersten Ölbohrung (6e), die auf einer Oberfläche der Pleuelstange (6) mündet, wobei die Ölbohrung (6e) sich geneigt nach oben unter einem spitzen Winkel (α) in Bezug auf eine Mittellinie (L1) erstreckt, die die Mitten des kleinen und großen Kopfes (6a,6b) der Pleuelstange (6) verbindet.

3. Brennkraftmaschine nach Anspruch 1 oder 2, **dadurch gekennzeichnet,** daß die Innendurchmesser (A) der Bolzen-Einsatzbohrungen (5b) größer sind als der Innendurchmesser (B) der Kugeloberflächenlager (30).

4. Brennkraftmaschine nach zumindest einem der Ansprüche 1 bis 3, **gekennzeichnet durch** Nuten (5d;5c') zum Einsetzen der Kugeloberflächenlager (30), die sich von der äußeren Zylinderfläche des Kolbens (5) zu La-germontageabschnitten (5c) für die Kugeloberflächenlager (30) erstrecken, und daß diese Nuten (5d;5c') parallel oder geneigt zur Achse des Kolbenbolzens (31) sind.

5. Brennkraftmaschine nach zumindest einem der Ansprüche 1 bis 4, **dadurch gekennzeichnet,** daß ein Winkel (E) zwischen den Umfangskanten und der Mitte der Kugeloberflächenlager (30) kleiner als 90° ist.

6. Brennkraftmaschine nach zumindest einem der Ansprüche 1 bis 5, **dadurch gekennzeichnet,** daß zumindest eine der Innenumfangskanten (30b) benachbart zur Achse des Kolbens (5) der Kugeloberflächenlager (30) und/oder zumindest eine der äußeren Umfangskanten (20b) der Enden des Kolbenbolzens (31) angefrast sind.

7. Brennkraftmaschine nach zumindest einem der Ansprüche 1 bis 6, **dadurch gekennzeichnet,** daß die Kugeloberflächenlager (30) aus zwei Teilen (301',302') bestehen.

8. Brennkraftmaschine nach zumindest einem der Ansprüche 1 bis 7, **dadurch gekennzeichnet,** daß der Radius (R1) der Krümmung der Kugeloberflächenlager (30) in axialer Richtung kleiner ist als der korrespondierende Krümmungsradius (R2) der Lagermontageabschnitte (5c).

9. Brennkraftmaschine nach zumindest einem der Ansprüche 1 bis 8, **dadurch gekennzeichnet,** daß die Kugeloberflächenlager (30) mit dem Kolben (5) gegossen sind.

10. Brennkraftmaschine nach zumindest einem der Ansprüche 1 bis 9, **dadurch gekennzeichnet,** daß die Außendurchmesser der beiden Enden des Kolbenbolzens (31) konisch sind, mit einer ersten Konusneigung, beginnend an der Umfangsoberfläche des Kolbenbolzens (31), gefolgt von einer zweiten Konusneigung, die steiler ist als die erste Konusneigung.

11. Brennkraftmaschine nach zumindest einem der Ansprüche 2 bis 10, wobei die Brennkraftmaschine (1) vom Typ mit Kurbelgehäuseverdichtung ist, **dadurch gekennzeichnet,** daß ein Einlaßkanal (13) über ein Einlaßventil (14) mit einer Kurbelkammer (2a) kommuniziert und so angeordnet ist, daß das Einlaßventil (14) der Oberflächenöffnung (6d) der Ölbohrungen (35) zugewandt ist, wenn der Kolben (5) sich in seinem unteren Totpunkt befindet.

12. Brennkraftmaschine nach zumindest einem der Ansprüche 2 bis 10, wobei die Brennkraftmaschine (1) von einem Typ mit Kurbelgehäuseverdichtung ist, **dadurch gekennzeichnet,** daß ein Einlaßkanal (13) über ein Einlaßventil (14) mit einer Kurbelkammer (2a) kommunizierend verbunden und so angeordnet ist, daß das Einlaßventil (14) der Seite der Pleuelstange (6) zugewandt ist, die der Oberflächenöffnung (6d) der Ölbohrung (35) gegenüberliegt, wenn der Kolben (6) sich in seinem unteren Totpunkt befindet.

13. Brennkraftmaschine nach Anspruch 12, **dadurch gekennzeichnet,** daß das Einlaßventil ein Reed-Ventil (14) ist.

14. Brennkraftmaschine nach Anspruch 11 oder 13, **dadurch gekennzeichnet,** daß eine Ölpumpe (201) einen Kurbellagerabschnitt (501a) des zumindest einen Zylinders (3) mit Schmiermittel versorgt, wobei der Kurbellagerabschnitt (501a) mit dem Ölkanal (34,35) und der Ölbohrung (6e) kommuniziert.

15. Brennkraftmaschine nach zumindest einem der Ansprüche 11 bis 14, **gekennzeichnet durch** eine Ölhaltenut (6c) die an dem großen Kopf (6b) der Pleuelstange (6) vorgesehen ist.

16. Brennkraftmaschine nach zumindest einem der Ansprüche 11 bis 15, **dadurch gekennzeichnet,** daß die Größe der Oberflächenöffnung (6d) von 1/40 bis 1/50 der Größe der Zylinderbohrung (3a) beträgt.

17. Brennkraftmaschine nach zumindest einem der Ansprüche 11 bis 16, **dadurch gekennzeichnet,** daß die Oberflächenöffnung (6d) unter einem Winkel (α) im Bereich von 15° bis 45° zu der Mitte der Pleuelstange (6) angeordnet ist.

18. Brennkraftmaschine nach zumindest einem der Ansprüche 11 bis 17, **gekennzeichnet durch** eine zweite Ölbohrung (6e) gegenüberliegend zu der ersten Ölbohrung (6e).

## Revendications

1. Moteur à combustion interne (1) comprenant au moins un cylindre (3) comportant un alésage de cylindre (3a) qui reçoit en coulissement un piston à mouvement alternatif (5) connecté par l'intermédiaire d'une bielle (6) à un vilebrequin (7), ladite bielle (6) comportant un pied de bielle (6a) fixé sur ledit piston (5) au moyen d'un axe de piston (31) qui est connecté à une paire de parties de bossage d'axe (5a), et comportant une tête de bielle (6b) fixée sur ledit vilebrequin (7) au moyen d'un maneton (33), comprenant en outre des paliers à surface sphérique (30) disposés dans lesdites parties de bossage d'axe (5a) et pouvant glisser sur celles-ci et comportant des orifices d'introduction d'axe (5b), caractérisé en ce que lesdits paliers à surface sphérique (30) ont une surface extérieure de forme sphérique et une surface intérieure cylindrique, afin de recevoir ledit axe de piston (31), et en ce que les parties sphériques des paliers sphériques (30) sont adaptées pour agir directement sur les parties de bossage d'axe (5a) du piston (5).

2. Moteur à combustion interne selon la revendication 1, caractérisé en ce qu'un passage d'huile (34, 35) est formé dans le vilebrequin (7) menant à la tête de bielle (6b) de ladite bielle (6), en communication avec un premier orifice à huile (6e) s'ouvrant sur une surface de la bielle (6), ledit orifice à huile (6e) s'étendant de manière inclinée vers le haut selon un angle aigu (α) par rapport à un axe (L1) reliant les centres du pied de bielle et de la tête de bielle (6a, 6b) de la bielle (6).

3. Moteur à combustion interne selon la revendication 1 ou la revendication 2, caractérisé en ce que les diamètres intérieurs (A) desdits orifices d'introduction d'axe (5b) sont plus grands que le diamètre intérieur (B) desdits paliers à surface sphérique (30).

4. Moteur à combustion interne selon au moins l'une des revendications 1 à 3, caractérisé par des gorges (5d ; 5c') destinées à l'introduction desdits paliers à surface sphérique (30) et étant formées à partir de la surface extérieure cylindrique dudit piston (5) jusqu'aux parties de montage de palier (5c) destinées aux dits paliers à surface sphérique (30), et en ce que ces gorges (5d ; 5c') sont parallèles ou inclinées par rapport à l'axe dudit axe de piston (31).

5. Moteur à combustion interne selon au moins l'une des revendications 1 à 4, caractérisé en ce qu'un angle (E) entre les bords périphériques et le centre desdits paliers à surface sphérique (30) est inférieur à 90°.

6. Moteur à combustion interne selon au moins l'une des revendications 1 à 5, caractérisé en ce qu'au moins l'un des bords périphériques internes (30b) proche de l'axe dudit piston desdits paliers à surface sphérique (30) et / ou au moins l'un des bords périphériques externes (20b) des extrémités dudit axe de piston (31) est chanfreiné.

7. Moteur à combustion interne selon au moins l'une des revendications 1 à 6, caractérisé en ce que lesdits paliers à surface sphérique (30) se composent de deux parties (301', 302').

8. Moteur à combustion interne selon au moins l'une des revendications 1 à 7, caractérisé en ce que le rayon de courbure (R1) desdits paliers à surface sphérique (30) dans le sens axial est plus petit que le rayon de courbure (R2) correspondant des parties de montage de palier (5c).

9. Moteur à combustion interne selon au moins l'une des revendications 1 à 8, caractérisé en ce que lesdits paliers à surface sphérique (30) sont moulés avec le piston (5).

10. Moteur à combustion interne selon au moins l'une des revendications 1 à 9, caractérisé en ce que les diamètres extérieurs des deux extrémités dudit axe de piston (31) sont coniques et comprennent une première conicité commençant à la surface périphérique dudit axe de piston (31) suivie par une seconde conicité qui est plus biseautée que la première conicité.

11. Moteur à combustion interne selon au moins l'une des revendications 2 à 10, ledit moteur à combustion interne (1) étant de type à compression du carter moteur, caractérisé en ce qu'un passage d'admission (13) est en communication par l'intermédiaire d'une soupape d'admission (14) avec une chambre de vilebrequin (2a) et est située de telle sorte que ladite soupape d'admission (14) fait face à ladite ouverture de surface (6d) dudit orifice à huile (35), lorsque ledit piston (5) est à son point mort bas.

12. Moteur à combustion interne selon au moins l'une des revendications 2 à 10, ledit moteur à combustion interne (1) étant de type à compression du carter moteur, caractérisé en ce qu'un passage d'admission (13) est en communication par l'intermédiaire d'une soupape d'admission (14) avec une chambre de vilebrequin (2a) et est située de telle sorte que ladite soupape d'admission (14) fait face au côté de ladite bielle (6) opposé à ladite ouverture de surface (6d) dudit orifice à huile (35), lorsque ledit piston (5) est à son point mort bas.

13. Moteur à combustion interne selon la revendication 12, caractérisé en ce que ladite soupape d'admission est une soupape à lames souples (14).

14. Moteur à combustion interne selon la revendication 11 ou la revendication 13, caractérisé en ce qu'une pompe à huile (201) fournit du lubrifiant à une partie de portée de vilebrequin (501a) dudit au moins un cylindre (3), ladite partie de portée de vilebrequin (501a) étant en communication avec ledit passage d'huile (34, 35) et ledit orifice à huile (6e).

15. Moteur à combustion interne selon au moins l'une des revendications 11 à 14, caractérisé par une gorge de retenue d'huile (6c) aménagée sur la tête de bielle (6b) de ladite bielle (6).

16. Moteur à combustion interne selon au moins l'une des revendications 11 à 15, caractérisé en ce que la dimension de ladite ouverture de surface (6d) est égale à environ 1/40e à 1/50e de la dimension dudit alésage de cylindre (3a).

17. Moteur à combustion interne selon au moins l'une des revendications 11 à 16, caractérisé en ce que ladite ouverture de surface (6d) est positionnée selon un angle (α) par rapport à l'axe de ladite bielle (6) dans une plage située entre 15° et 45°.

18. Moteur à combustion interne selon au moins l'une des revendications 11 à 17, caractérisé par un second orifice à huile (6e) aménagé à l'opposé dudit premier orifice à huile (6e).
